# EUROPEAN PATENT SPECIFICATION

(11) **EP 2 829 170 B1**
(45) Date of publication and mention of the grant of the patent: **21.09.2016**
(21) Application number: 14175855.7
(22) Date of filing: 04.07.2014
(51) Int. Cl.: A01D 46/26, A01D 69/02

(54) **Harvest machine for olive and similar fruits with adjustable fruit resonance vibration frequency**
Erntemaschine für Oliven und ähnliche Früchte mit nach Frucht-Resonanz einstellbarer Vibrationsfrequenz
Machine de récolte pour les fruits d'olive et similaires avec fréquence de vibration réglable à la résonance du fruit

(30) Priority: 23.07.2013 TR 201308918
(43) Date of publication of application: 28.01.2015
(73) Proprietor: Celik, Mehmet, 06000 Ankara (TR)
(72) Inventor: Celik, Mehmet, 06000 Ankara (TR)

(56) References cited:
- EP-A1- 1 116 432
- WO-A1-03/000034
- WO-A1-2005/070190
- DE-A1-102007 057 426
- FR-A1- 2 696 072
- US-A- 3 491 520

## Description

Vibrations in our daily lives are phenomenon encountered in our work lives and vehicles. Vibration usually emerges as damaging and disturbing side effect of a beneficial process. In this study, the idea of taking advantage of this physical event - which has a destructive power - has been utilized and product developments have been made within this scope.

Each structure located in nature, has infinite quantity of natural frequencies. When the structures are loaded to this frequency, resonance frequency is composed. During resonance, the structure begins to vibrate in oscillatory modes at high amplitudes, which correspond to relevant resonance frequencies. In this resonance, depending on the given execution time, permanent distortions could be on the structures. In this sense, a unit could increase by 10 times according to given vibration energy. Designers of dynamic systems (automotive, aircraft, train, motor, etc.) should pay attention to resonant frequencies which shouldn't be in driving frequencies of the machines. In this context, the dominant natural frequency of fruit experimental modal analysis methods is identified. In designs, engineers try to make sure that there is no overlapping of frequencies by dislocating them from the excitation frequency bands which are applied on natural frequency of structures. Should there be an overlapping, they have to take precautions.

Within this scope, first of all, dominant natural frequencies belonging to the fruit are identified through experimental model analysis method. Then, with a vibrating device which will give the same olive resonance frequency to the structure, the tree is stimulated and fruit is harvested by the aid of resonance with low energy. What is more important is that the tree's other elements (trunk, branches, leaf) vibrate slightly; so, this assures minimum damage (not spilled because of having different natural frequencies). The patents related with fruit harvest are given below. The field which is related to the invention is fruit (olive, almond, apricot, plum, mulberry, walnut, etc.) harvest. For instance, there are vibrating olive harvester devices but none of them is calibrated to olive resonance.

Generally, available olive harvesting machines gives stimulations at high frequencies (>2000 rpm), by giving power to the trees the fruits fall with leaves and thin branches. At the same time, by shaking the trunk, it removes the fruit but reduces the yield, the impact of which will be seen in ensuing harvesting years. On the whole, in these machines, hook mouth is fixed and it is observed that it barks the tree or breaks the branches. Furthermore, an operator who uses these machines (about 30 kg) has to carry this system, especially the vibration parts, by himself, causing exhaustion after 8-10 trees have been harvested. During harvest, in some machines, olives are mixed with branches and this case causes destruction of the seedlings. Therefore, farmers seem to have second thoughts about using these machines.

In patent document, US Patent Office US6044638 (A), the olive and fruits are harvested with moving mechanism by barking.

In patent document, IT1236006 (B), olives and tubular are spilled with the help of a stick.

In patent document, JP2003047316 (A), the olive branches, which are placed in the mechanism, make blending with the other moving part.

In patent document, IT1235523 (B), with a system which is attached to a pneumatic tractor, the process harvests the olives.

In patent document, US Patent Office 7854108, with cameras, which are at the semi-automatic and automatic robot system, make harvesting by detecting the position of the fruit. The cameras may be coupled with an arm or other implement to allow views from inside the plant when performing the desired agricultural function. A robot moves through a field first to map the plant locations, number and size of fruit and their approximate positions. An action plan may comprise operations and data specifying the agricultural function to perform.

In patent document, JP08289652 (A), fruit picking process works with a mechanism which is formed with gears. This vibrating harvester is constituted by providing a rod consisting of a main rod and a sub-rod by linking them in their middles, and a vibration offsetting device capable of reversing the phases of the main rod and the sub-rod is installed at the linking part. It is understood that deflection mechanism, which gives vibration, could spend high energy and give displacement which gives damages to the olive trees.

In patent document, CN102349395 (A), vibration is given with hydraulic motor. Because of the high frequency limitation of hydraulic motors, invention can work in dried fruit and similar harvests. The management of the system needs a device which gives hydraulic pressure.

WO1999001022 patent document is about harvesting of a tree branch such as olive or almond or of tree branch or secondary trunk. It is an already known vibration generating mechanism derived by a linear alternative or vibrating motion which exerts an engine from the connection joints. Vibration effect and occasional bouncing on a machine frame is transferred.

EP1654922B1 patent document comprises a main body rotation providing elements and substantially rod shaped, and said moving means by the action of substantially the main body and vibrating element, elastic deformation to prevent suitable stiffening elements. The introduction of the stiffening means allows a substantial overall increase of the length of the shaking elements with respect to the maximum dimensions attainable by the rods, making up the rotating arms of the known shakers and eliminating the risk of mechanical instabilities.

EP0557236A1 patent document uses an oscillating movement from a framework which is connected to a tractor in such a way that it can use the power of the tractor through the "power take-off" (P.T.O.) of the tractor, and its hydraulics, for its energy needs, which react to the pull movements of the cable directly connected to the mechanism. This mechanism includes a grabbing action system of opposing jaws to branches at the end of a cylinder which pulls movements and has power and gives the examined push movement of spring of the mechanism. The rod compresses the spring against the cable. The spring must have enough extra compression movement to accommodate the maximum amplitude that may be required. This frequency control depends on tree stiffness and is performed with the springs and it is uncontrolled for the crop maturity.

US3491520A discloses a vibration adjustable harvest machine according to the preamble of claim 1.

### TECHNICAL PROBLEMS THAT THIS INVENTION AIMS TO SOLVE

Harvest is the forefront of the process which needs a lot of labour in mechanisations of olive and same kind of fruits. So, there is a high cost for labour charges. As a result of the surveys, the percentages for labour charges per tree are: irrigation is (3%), agricultural spraying is (11%), fertilization is (23%), pruning is (25%) and the biggest percentage is for the harvest which is 38 %.

Thus, developing, manufacturing and extending suitable olive and fruit harvesting machines for the regions field conditions has a great importance in terms of decreasing the cost of operations especially in using the harvest processes.

In this study, as an example, olive which has a big profit in agriculture has been investigated. A "resonance vibrating olive harvesting machine" has been developed for the optimisation of vibrating olive harvesting machines which are not commonly used in the country's olive fields and which is tried to be used by the farmers. The electro-dynamic structure of this new production has been designed, its kinematical analysis has been done in computer environment and limit resonance values of its performance have been obtained by experimental modal analysis.
The innovations of the present invention;
- The system has the ability of olive and similar fruits harvesting with the use of the resonance technique according to the fruit ripeness without damage to the tree, branches and leaves with less energy requirement.
- In this system with the flexible harvesting rod, the adjustment of the harvest is controlled by the operator with an on-off power key and wire adjusting mechanism arm of the hook.
- In this system, the fruit branches are clutched by the remote controlled hook smoothly and after vibration no damage occurs on the bark.
- This system is able to harvest fruits with the mobile electrical energy that can be assembled with the hardware and three level resonance set button.
- This system is transported by trolley or tripod in order to carry the weight of the vibrating structure without exhausting the farmers' energy and a person has the possibility to harvest it alone.

### LIST OF FIGURES

Figure 1, it is the schematic image of Olive Harvest Machine for Trolley Model.
Figure 2, it is the schematic image of Olive Harvest Machine for Tripod Model.
Figure 3, it is the model of system engine and mechanism.
Figure 4, it is the model of flexible harvesting rod with control drive.
Figure 5, it is the model of adjustable branch clutching hook.
Figure 6, it is the model of system energy unit.

The parts in these figures are enumerated one by one and their names are given below:
1. System Engine and Mechanism
2. Flexible Harvesting Rod with Control Drive
3. Adjustable Branch Clutching Hook
4. System Energy Unit
5. System Frame (Trolley or Tripod Model)

### EXPLANATION OF INVENTION

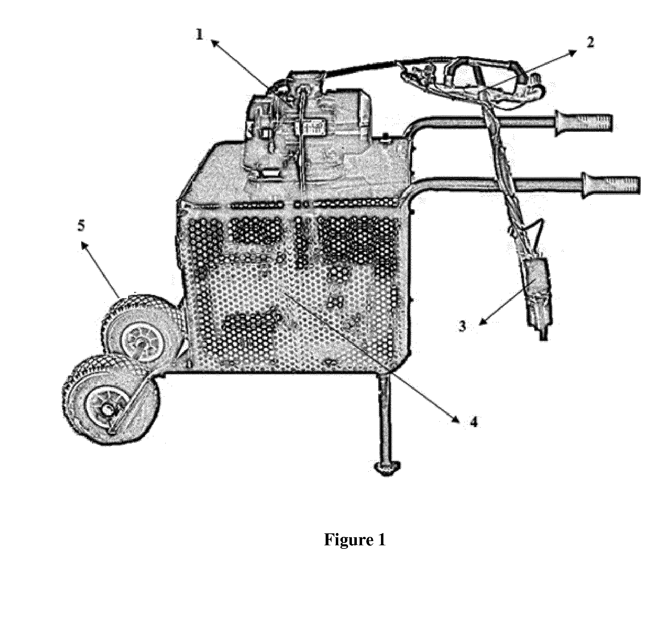

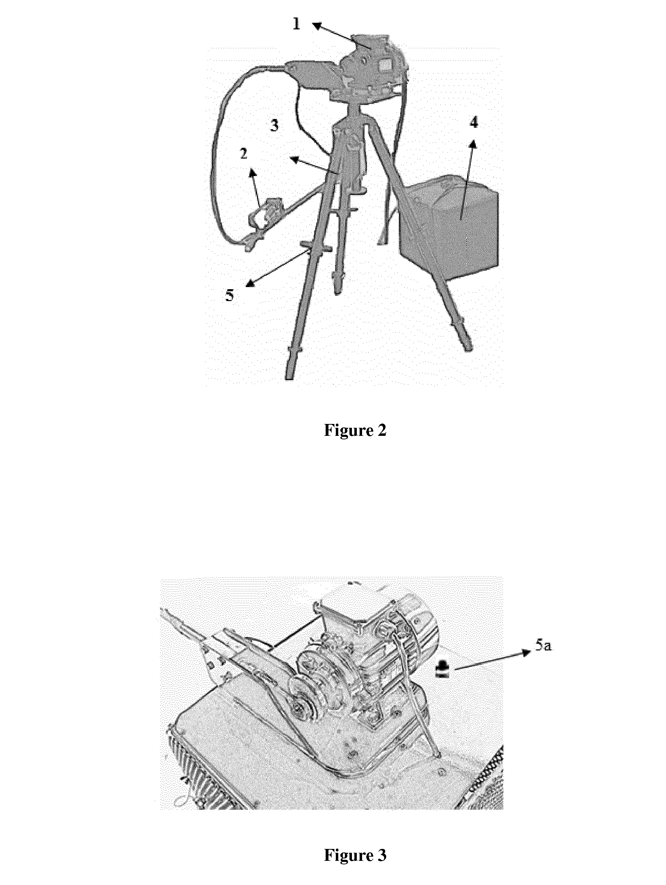

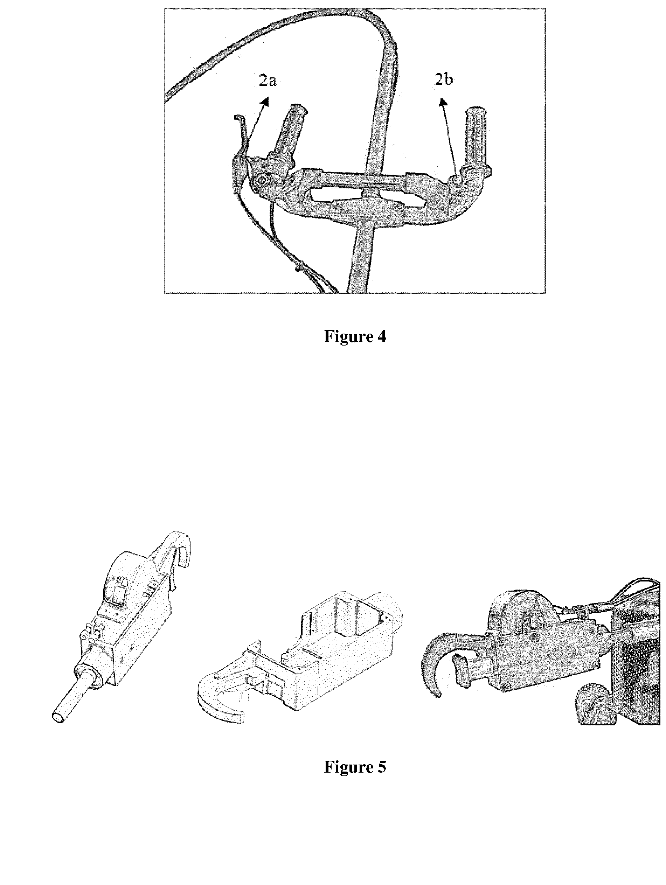

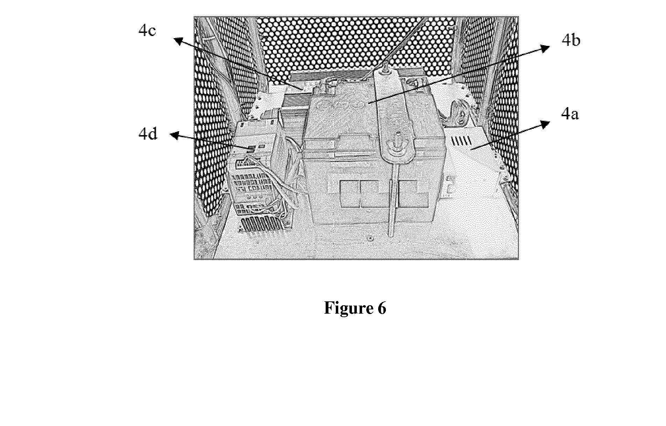

The aim of this invention is to provide the harvest of olive and same kind of fruits with a minimum cost and maximum agricultural productivity. In the system given with Figure 1 and 2, there are five main components. These are; 1- System Engine and Mechanism, 2- Flexible Harvesting Rod with Control Drive, 3- Adjustable Branch Clutching Hook, 4- System Energy Unit and 5-System Frame.
(1) Cyclical mechanical action occurring in the system engine is transformed to bidirectional linear action by crank rod mechanism (Figure 3). This process causes vibrating action and shaking of branch in some frequencies.
(2) A flexible and twistable material was used in connection rod. Thanks to this flexible connection rod (Figure 4), moving ability of harvesting rod was increased and the hook among the tree branches was enabled to move easily. There is a steering wheel on flexible rod which is designed for the operator to use the system easily. The steering wheel is controlled by the operator. There is a power key (2b) and wire adjusting mechanism arm (2a) of hook for long distances (2m-3m) on the steering wheel.
(3) Another feature of the invention, which is one of the topics of the patent, is a branch clutching hook shown in Figure 5. This hook clutches the branch smoothly; it can be adjusted with wires from long distance to shake the tree branch of the system according to the ground clearance and diameter of branch so that no damage occurs on the bark.
(4) System works with mobile electrical energy shown in Figure 6. To do this, the electrical energy obtained from the chargeable industrial accumulators (dry gel) (4b) is transformed into the form which can be used by three-phase AC electrical engine (1) after passing from transducers (DC-AC transducer (inverter)) (4c) and frequency drivers (4d) (by adjusting to desired resonance frequency with three level resonance set (5a)). The system energy, on average, runs for three work days (24 hours) and with the rectifier (4a) on system frame, charging can be possible.
(5) The system is designed on trolley and tripod as two versions of mobile product shown in Figures 1 and 2. The system frame has system engine mechanism and system energy unit with three level resonances set button (5a). So, the weight of the structure and the vibration are not directly transmitted to the operator. The hook handle can be fixed to the frame during the movement so that the harvesting can be made only by one person.

### APPLICATION FORM OF THE INVENTION TO THE INDUSTRY

It is stated how the industry can benefit from the invention and where it can be implemented or used.

Just as natural frequencies change from fruit to fruit, these frequencies change according to ripeness situation of the fruit. For instance; in the same tree, olives conditions such as green, pink (the beginning of the ripening) or mature (black) are encountered during the harvest. In spite of high cost, the farmers are forced to harvest by hand. The aim of this is, by collecting mature ones and leaving the others on tree, to let them ripe and harvest later. During harvest, storing together of the olives, which are of the same maturity, is important.

A harvesting system is needed to perform the desired harvest. These demands are applied with a harvesting system which is economical and has a possible vibration frequency (determined in current invention). The system performs the harvest according to olive's maturity condition. Furthermore, the farmer harvests efficiently and easily with retention mechanism according to the diameter of the branch without giving harm to the branch.

To do this, the system is driven on trolley wheels or carried with tripod (5) and brought under a tree which is due to be harvested. Then, the hook (3) on the edge of rod is attached by the operator with a control steering wheel which belongs to a 2-3 m flexible harvest rod (2). The farmer tightens the hook on the steering wheel with a clutching wire adjusting arm (2a) according to the diameter of branch.

Then the selection is done with a three-level resonance set button according to the maturity type of the olive (black, pink, green) (5a). Harvesting is started with the power key (2b) on the steering wheel. Depending on the abundance of olives on the tree, the tree branch is vibrated between 30s and 60s duration with a bidirectional linear action that is transformed by the crank rod mechanism from the system engine (1) to flexible harvest rod (2). By means of this process, the fruit is collected into awnings or modified boxes. After finishing the first main branch, harvesting is continued with the other branches.

Depending on the number of main branches on the tree, harvesting one tree takes 5 to 10 minutes. So, mature fruit on the tree is picked up and desired harvesting is completed.

## Claims

1. A resonance adjustable harvest machine for harvesting fruit (olive, almond, apricot, etc.) by shaking a branch with a vibratory movement, comprising a system engine and mechanism (1), a flexible harvest bar with drive control (2), an adjustable branch clutching hook (3), a system energy unit (4) and a system frame (5) ; **characterised in that** the system frame carries a three level resonance set button (5a) and can be in a form of a trolley or a tripod (three-feet).

2. The resonance adjustable harvest machine of Claim 1,
wherein the flexible harvest bar with drive control (2), comprises a power key (2b) and the clutching hook (3) with a wire adjustment mechanism arm (2a).

3. The resonance adjustable harvest machine of Claim 1,
wherein the system energy unit (4) comprises industrial accumulators (4b) charged via a rectifier (4a), an inverter (4c), a frequency drive (4d) and a three-phase AC electric motor (1) coupled with a crank-rod mechanism for turning the cyclical mechanical movement to bidirectional movement being used for adjustable fruit resonance frequencies.

## Patentansprüche

1. Eine Vorrichtung zum Ernten von Früchten (Oliven Aprikosen, Mandeln u.ä.) dadurch dass Zweige mit einer schwingenden Bewegung geschüttelt werden deren Frequenz mit einer vorher bestimmten Resonanzfrequenz oder Resonanzfrequenzen der Früchte übereinstimmt. Die Vorrichtung beinhaltet einen Systemmotor mit zugeordneter Mechanik (1), einen flexiblen Erntearm mit Antriebskontrolle (2) einen einstellbaren Astgreifhaken (3), eine Energieeinheit (4) und einen Systemrahmen(5) **gekennzeichnet dadurch dass** der Rahmen einen Dreistufen-Einsteller zum Einstellen der vorbestimmte Resonanzfrequenz(en) trägt und als Wagen oder Dreibein ausgeführt sein kann.

2. Eine Vorrichtung einstellbar auf die Schwingungs-Resonanzfrequenze(n) der zu erntenden Früchte gemäss Anspruch 1
ausgeführt so dass der flexible Erntearm mit Antriebskontrolle (2) mit einem Ein-/Ausschalter und der Astgreifhaken (3) mit einem Drahtmechanismus zur Einstellung ausgestattet ist.

3. Eine Vorrichtung einstellbar auf die Schwingungs-Resonanzfrequenze(n) der zu erntenden Früchte gemäss Anspruch 1
ausgeführt so dass die Energieeinheit (4) industrielle Akkumulatoren verwendet, die über einen Gleichrichter (4a) aufgeladen werden, und weiterhin einen Wechselrichter(4c), einen Frequenzumrichter(4d) und einen Dreiphasen-Elektromotor (1) verbunden mit einem Kurbelmechanismus zur Umwandlung der Drehbewegung in eine Hin- und Herbewegung die mit der einstellbaren Resonanzfrequenz ausgeführt wird.

## Revendications

1. Une machine de récolte de résonance réglable pour la récolte de fruits (olives, amandes, abricots, etc.) en secouant la branche avec le mouvement vibratoire, comprenant un mécanisme et un moteur de système (1), une barre de récolte flexible avec commande d'entraînement (2), un crochet réglable pour agripper les branches (3), une unité d'énergie du système (4) et un cadre du système (5), qui se **caractérise en ce que** le cadre du système porte un bouton de réglage de résonance à trois niveaux (5a) et peut être sous la forme d'un chariot ou d'un trépied (trois pieds).

2. La machine de récolte de résonance réglable qui se figure dans la Revendication 1, dans laquelle la barre de récolte flexible avec commande d'entraînement (2) comporte une touche marche/arrêt (2b) et un crochet à agripper (3) avec un bras de mécanisme de réglage de câble (2a).

3. La machine de récolte de résonance réglable qui se figure dans la Revendication 1, dans laquelle l'unité d'énergie du système (4) comprend des accumulateurs industriels (4b) rechargés par un redresseur (4a), un inverseur (4c), un variateur de fréquence (4d) et un moteur électrique à courant alternatif triphasé (1) couplé à un mécanisme de vilebrequin pour faire tourner le mouvement mécanique cyclique au mouvement bidirectionnel utilisé pour des fréquences réglables de résonance de fruits.
